**Europäisches Patentamt**

**European Patent Office**

**Office européen des brevets**

(19)

(11) Veröffentlichungsnummer : **0 034 854**
**B1**

(12) **EUROPÄISCHE PATENTSCHRIFT**

(45) Veröffentlichungstag der Patentschrift :
08.02.84

(51) Int. Cl.³ : **B 60 T 17/22**

(21) Anmeldenummer : 81200157.6

(22) Anmeldetag : 09.02.81

(54) **Überwachungsschaltung für eine Signalausgabeschaltung an einer Bremseinrichtung eines Fahrzeuges.**

(30) Priorität : 15.02.80 CH 1248/80

(43) Veröffentlichungstag der Anmeldung :
02.09.81 Patentblatt 81/35

(45) Bekanntmachung des Hinweises auf die Patenterteilung : 08.02.84 Patentblatt 84/06

(84) Benannte Vertragsstaaten :
**AT BE CH DE FR IT LI NL SE**

(56) Entgegenhaltungen :
**DE-A- 1 962 322**
**DE-A- 2 742 991**
**DE-A- 2 838 994**
**FR-A- 2 070 836**
**GB-A- 1 303 677**
**GB-A- 1 303 677**
**GB-A- 2 004 011**
**US-A- 4 061 403**
**US-A- 4 143 926**
**US-A- 4 143 926**

(73) Patentinhaber : **Werkzeugmaschinenfabrik Oerli-kon-Bührle AG**
**Birchstrasse 155**
**CH-8050 Zürich (CH)**

(72) Erfinder : **Widmer, Eugen, El-Ing. ETH**
**Heugatterstrasse 22a**
**CH-8600 Dübendorf (CH)**

Ueberwachungsschaltung für eine Signalausgabeschaltung an einer Bremseinrichtung eines Fahrzeuges

Die Erfindung betrifft eine Ueberwachungsschaltung für eine Signalausgabeschaltung an einer Bremseinrichtung eines Fahrzeuges, insbesondere eines Schienenfahrzeuges, wobei die Signalausgabeschaltung ein Schaltelement aufweist, das mit einem Eingangsignalkreis verbunden ist und das einen Ausgabesignalkreis kontrolliert.

Bei Elektronikschaltungen für Schienenfahrzeugbremsanlagen ist es besonders wichtig, dass fehlerhafte Ausgaben von Signalen, insbesondere wenn dadurch ein gefährlicher Zustand herbeigeführt werden könnte, nicht auftreten können. Beispielsweise könnte bei einer Gleitschutzeinrichtung ein falsches Signal ein unerwünschtes Entlüften der Bremszylinder herbeiführen. Bei einer solchen Gleitschutzeinrichtung werden beispielsweise Elektromagnetventile, welche Bremszylinder an Bremsleitungen anschliessen, über Schaltelemente gesteuert. Die Signalausgabe dieser Schaltelemente ist deshalb besonders zu überwachen.

Die Erfindung, wie sie in den Ansprüchen gekennzeichnet ist, löst die Aufgabe, eine Ueberwachungseinrichtung zu schaffen, mit der die Ausgabe eines Signals im Falle eines Fehlers in der Signalausgabeschaltung verhindert wird. Im folgenden wird anhand von Ausführungsbeispielen die Erfindung unter Bezugnahme auf die Zeichnungen erläutert. Es zeigen :

Figur 1 ein schematisches Blockschaltbild einer Gleitschutzeinrichtung für Schienenfahrzeuge mit einer erfindungsgemässen Ueberwachungsschaltung,

Figur 2 ein elektrisches Schaltbild einer Ausführungsform der Ueberwachungsschaltung gemäss Fig. 1,

Figur 3 ein elektrisches Schaltbild einer weiteren Ausführungsform der Ueberwachungsschaltung,

Figur 4 ein detailiertes elektrisches Schaltbild eines Teils der Ausführungsform von Fig. 2,

Figur 5 ein detailiertes elektrisches Schaltbild eines Teils der Ausführungform von Fig. 3.

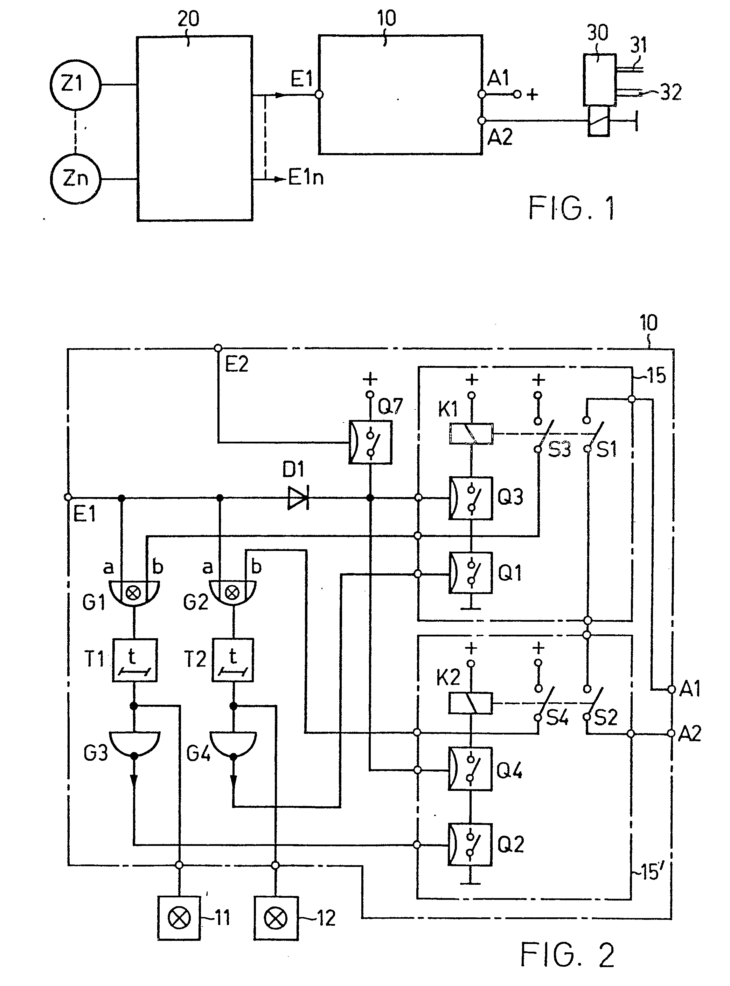

In Fig. 1 ist eine Gleitschutzeinrichtung für ein Schienenfahrzeug mit einer erfindungsgemässen Ueberwachungsschaltung 10 dargestellt. Bei solchen bekannten Einrichtungen werden die Drehzahlen der einzelnen Achsen mit Hilfe von Raddrehzahlsensoren Z1, Zn gemessen und in einer Steuerschaltung 20 verwertet. Daran werden für jeden zu überwachenden und hier nicht dargestellten Achsbremszylinder je eine Ueberwachungsschaltung 10 über je einen Signaleingang bzw. Eingangsklemmen E1, E1n angeschlossen. Ein Ausgabesignalkreis ist über eine Ausgangsklemme A1 mit einer Spannung und über eine weitere Ausgangsklemme A2 mit einem Elektromagnetventil 30 verbunden. Dieses Elektromagnetventil seinerseits ist über Bremsleitungen 31, 32 in der Lage, den erwähnten Achsbremszylinder an eine ebenfalls nicht dargestellte Druckquelle anzuschliessen. Die erfindungsgemässe Ueberwachungsvorrichtung 10 mit der darin integrierten Signalausgabeschaltung wird anhand der Fig. 2-5 näher erläutert.

Gemäss Fig. 2 enthält die zu überwachende Signalausgabeschaltung ein erstes Schaltelement, hier als Relais K1 mit einem Schaltkontakt S1 ausgebildet, einen Ausgabesignalkreis zwischen den Ausgangsklemmen A1 und A2 sowie einen Eingangssignalkreis, der von der Eingangsklemme E1 zu einem Schalter Q3 führt. Dieser ist als elektronischer Schalter ausgebildet und im Einschaltkreis des Relais K1 angeordnet.

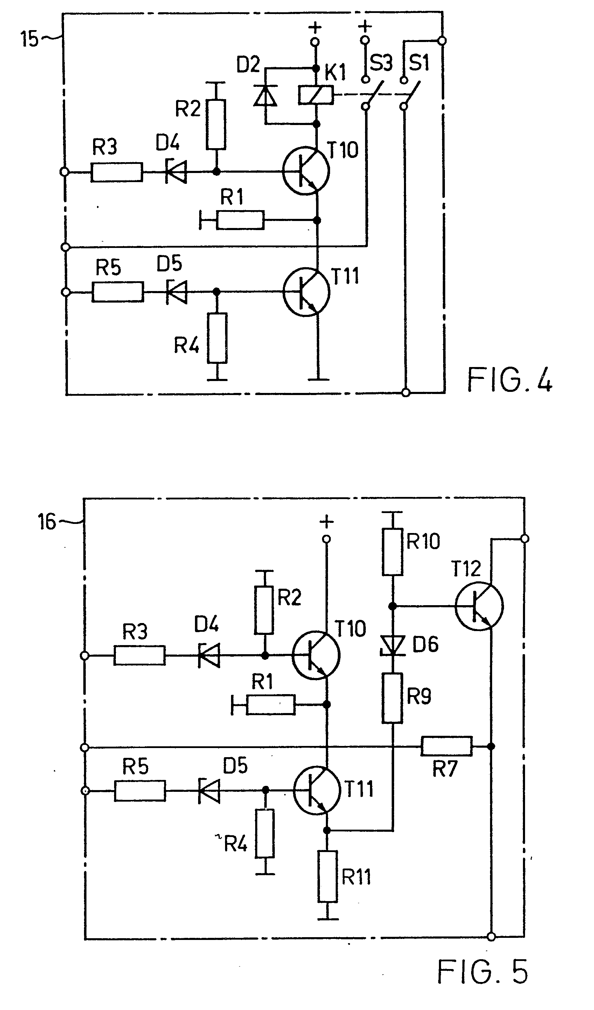

Die Ueberwachungsschaltung 10 enthält ein Relais K2 als zweites Schaltelement, einen Schaltkontakt S2 in Serie zum Schaltkontakt S1 im Ausgabesignalkreis und im Relaiseinschaltkreis einen Schalter Q4, hier auch als elektronischer Schalter ausgebildet, der ebenfalls mit der Eingangsklemme E1 verbunden ist. An die Eingangsklemme E1 sind ein erster und ein zweiter Vergleicher G1 und G2, beispielsweise je ein EX-OR-Gatter, mit dem einen Eingang a angeschlossen. Der zweite Eingang b des ersten Vergleichers G1 ist über einen Schaltkontakt S3 des Relais K1 an eine Spannungsquelle angeschlossen. Die beiden Schaltkontakte S1 und S3 sind mechanisch miteinander und mit dem Relais K1 gekoppelt. In entsprechender Art und Weise, wie dies aus Fig. 2 hervorgeht, ist auch der zweite Eingang b des zweiten Vergleichers G2 über einen Schaltkontakt S4 an eine Spannungsquelle angeschlossen und die Schaltkontakte S2 und S4 sind ebenfalls mechanisch mit dem Relais K2 gekoppelt. Beide Relais K1 und K2 sind je einerseits an eine Spannungsquelle angeschlossen. Der Ausgang der beiden Vergleicher G1, G2 ist mit je einem Versögerungselement T1, T2 verbunden. Die beiden Verzögerungselemente T1, T2 weisen unterschiedliche Verzögerungszeiten auf. Der Ausgang des Verzögerungselementes T1 führt über einen Inverter G3 zu einem zweiten Schalter Q2. Dieser ist hier ebenfalls als elektronischer Schalter ausgebildet und in Serie zum Schalter Q4 im Einschaltkreis des Relais K2 angeordnet. In entsprechender Weise ist der Ausgang des Verzögerungselementes T2 über einen Inverter G4 mit einem ersten Schalter Q1 im Einschaltkreis des Relais K1 verbunden. Eine Eingangsklemme E2, verbunden mit einem elektronischen Schalter Q7, der einerseits an eine Spannungsquelle und anderseits an den Eingangskreis der Schalter Q3, Q4 angeschlossen ist, sowie eine Diode D1 als Sperre zur Eingangsklemme E1, dient als fakultative Testeinrichtung. Weiterhin können ebenfalls fakultativ Anzeigelampen 11, 12, beispielsweise verbunden mit den Eingängen der Inverter G3, G4, vorgesehen sein. In Fig. 4 ist eine Teilschaltung 15 detailierter dargestellt, die auch entsprechend für eine weitere Teilschaltung 15' gültig ist.

Gemäss Fig. 4 ist dem Relais K1 eine Löschdiode D2 parallel geschaltet. Der Schalter Q3 wird ersetzt durch einen Transistor T10, Widerstände R1, R2 und R3 sowie eine Zenerdiode D4. Der Schalter Q1 wird ersetzt durch einen Transistor T11, zwei Widerstände R4, R5 sowie eine Zenerdiode D5.

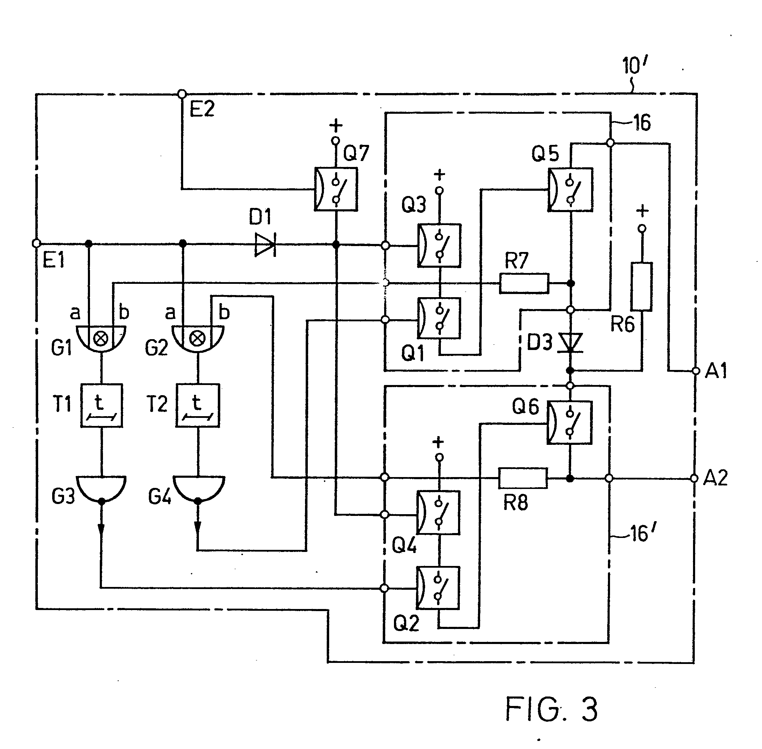

In der Schaltung von Fig. 3 sind gegenüber derjenigen von Fig. 2 nachfolgend aufgeführte Aenderungen vorgenommen worden. Als erstes und zweites Schaltelement werden hier die beiden elektronischen Schalter Q5 und Q6 eingesetzt. Der Schalter dieser beiden elektronischen Schalter Q5, Q6 ist nun direkt im Ausgabesignalkreis zwischen den Ausgangsklemmen A1, A2 angeordnet. Eine Entkoppelungsdiode D3 ist in Serie zwischen den beiden elektronischen Schaltern Q5, Q6 eingesetzt. Die zweiten Eingänge b der beiden Vergleicher G1 bzw. G2 sind über je einen Widerstand R7 bzw. R8 mit der einen Schalterseite der elektronischen Schalter Q5 bzw. Q6 verbunden. Die andere Schalterseite des elektronischen Schalters Q6 ist auch über einen Vorwiderstand R6 mit einer Spannungsquelle verbunden.

In Fig. 5 ist wiederum eine Teilschaltung 16 detaillierter dargestellt, die auch entsprechend für eine Teilschaltung 16' gültig ist.

Die in Fig. 5 in der gleichen Schaltung wie in Fig. 4 verwendeten Elemente, sind mit den gleichen Bezugsszeichen angegeben. Als elektronischer Schalter Q5 wird hier ein Transistor T12 verwendet, dessen Basisbeschaltung Widerstände R9, R10 und R11 sowie eine Zenerdiode D6 zwischen den beiden letzteren bilden. Die Verbindung zwischen den Widerständen R9 und R11 ist an den Emitter des Transistors T11 angeschlossen. Der Kollektor des Transistors T10 ist an eine Spannungsquelle angelegt.

Die Wirkungsweise dieser Schaltungen ist die folgende :

In Ruhelage, jedoch bei eingeschalteter Versorgungsspannung, erhält die Eingangsklemme E1 der Fig. 2 kein Signal von der Steuerschaltung 20 der Fig. 1. Die elektronischen Schalter Q3, Q4 sind somit offen und die beiden Schaltelemente bzw. Relais K1, K2 können nicht anziehen. Die Schaltkontakte S1-S4 und damit der Ausgabesignalkreis sind offen. An den Eingängen der zwei Vergleicher G1, G2 ist kein Signal vorhanden, wodurch an die Verzögerungsschaltungen T1, T2 kein Signal weitergeleitet werden kann. Die beiden Inverter G3, G4 leiten durch die Invertierung von Signal « 0 » am Eingang ein entsprechendes Signal « 1 » an die elektronischen Schalter Q2, Q1, wodurch diese Schalter schliessen. Dies ist auch aus Fig. 4 ersichtlich, indem dem Widerstand R5 ein Signal, z. B. eine Spannung von mehr als 4 Volt zugeführt wird, wodurch die Zenerdiode D5 überbrückt und der Transistor T11 leitend werden.

Bei normaler Arbeitsstellung wird der Eingangsklemme E1 ein Signal zugeführt, das über die Diode D1 die elektronischen Schalter Q3, Q4 schliesst. Da die Schalter Q1, Q2 ebenfalls geschlossen sind, ziehen die Relais K1, K2 an und die Schaltkontakte S1-S4 schliessen sich. Der Ausgabesignalkreis ist geschlossen und das Elektromagnetventil 30 (Fig. 1) kann ebenfalls anziehen. Die zwei Vergleicher G1, G2 erhalten an ihren beiden Eingängen a, b gleichwertige Signale, wodurch wiederum keine Signale an die Verzögerungselemente T1, T2 weitergeleitet werden. Die Verzögerungselemente T1, T2 haben die während der Ansprechzeit der Schaltung auftretende Signale der Vergleicher G1, G2 noch nicht weitergeleitet, bedingt durch die gewählte Verzögerungszeit, sodass die elektronischen Schalter Q1, Q2 weiterhin geschlossen bleiben. In der Fig. 4 hat dieser Vorgang zur Folge, dass am Widerstand R3 eine Spannung angelegt wird, welche die Spannung der Zenerdiode D4 zu überbrücken vermag, wodurch der Transistor T10 leitend wird. Durch die angesteuerten Transistoren T10, T11 wird nun auch das Relais K1 aufgezogen. Die Widerstände R1 bzw. R2 und R4 sind Schutz bzw. Basiswiderstände.

Tritt ein Fehler in der zu überwachenden Signalausgabeschaltung sowie auch in der Ueberwachungsschaltung selbst auf, z. B. Kurzschluss, Unterbruch, Kleben eines Relaiskontaktes usw., wird der Schaltkontakt S3 oder S4 in falscher Stellung sein. Mindestens einer der beiden Vergleicher G1, G2 spricht an und löst im entsprechenden Verzögerungselement T1, T2 ein Signal aus, das über den entsprechenden Inverter G3, G4 das Oeffnen des entsprechenden Schalters Q1, Q2 bewirkt. Dadurch fällt auch das entsprechende Relais K1, K2 ab und der Ausgabesignalkreis wird über den entsprechenden Relaiskontakt S1, S2 unterbrochen.

Falls beide Relais K1, K2 fälschlicherweise gleichzeitig eingeschaltet sind, lösen beide Vergleicher G1 und G2 durch die Abwesenheit eines Signals an der Eingangsklemme E1 ein Signal aus und in der Folge davon fallen die Relais K1, K2 durch das Oeffnen der beiden Schalter Q1, Q2 ab. Um ein dauerndes Ein- und Ausschalten der Relais K1 und K2 des Ausgabesignalkreises zu vermeiden, sind bei den Verzögerungselementen T1, T2 unterschiedliche Verzögerungszeiten gewählt worden. Somit wird zuerst das Relais mit dem Verzögerungselement mit der kürzeren Verzögerungszeit im Einschaltkreis abgeschaltet. Der zugehörige Schaltkontakt S3 oder S4 unterbricht das Signal für den zweiten Eingang b am anderen Vergleicher und lässt damit das andere Relais eingeschaltet. Damit ist ein stabiler Zustand erreicht.

Die Anzeigelampen 11 und 12 dienen dazu, ein Fehlverhalten in der Schaltung anzuzeigen. Die gesamte Schaltung kann periodisch, manuell oder automatisch, überprüft werden, indem an die Eingangsklemme E2 ein Testsignal an den elektronischen Schalter Q7 eingegeben wird. Das Schliessen dieses Schalters Q7 bewirkt nun das Anziehen der beiden Relais K1, K2 und infolge der unterschiedlichen Verzögerungszeiten den oben erwähnten stabilen Zustand mit einem angezogenen und einem abgefallenen Relais, da dieses Testsignal die Eingänge a der beiden Vergleicher G1, G2 aufgrund der dazwischen geschalteten Diode D1 nicht erreichen kann. Wiederum wird dann die eine der Anzeigelampen 11 oder 12 den Fehler anzeigen.

Werden anstelle der elektromechanischen Relais K1, K2 beispielsweise elektronische Schalter Q5, Q6 als Schaltelemente gemäss Fig. 3 und 5 verwendet, unterscheiden sich die obenbeschriebenen Wirkungsweisen folgendermassen :

In normaler Arbeitsstellung bei geschlossenen Schaltern Q1 bis Q4 sind auch die beiden elektronischen Schalter Q5 und Q6 und dadurch der Ausgabesignalkreis geschlossen. Die Schalter Q1, Q2 sind nicht direkt an Erde gelegt. Dies wird in Fig. 5 verdeutlicht. Bei eingeschalteten Transistoren T10, T11 entsteht eine Spannung über dem Emitterwiderstand R11, welche die Spannung der Zenerdiode D6 überbrückt und damit den als Schaltelement wirkenden Transistor T12 ansteuert. Ueber den eingeschalteten Transistor T12 und dem Widerstand R7 wird dem zweiten Eingang b des Vergleichers G1, siehe Fig. 3, ein Signal abgegeben. Das Signal für den zweiten Eingang b des Vergleichers G2 wird diesem von einer Spannungsquelle über den Vorwiderstand R6, den elektronischen Schalter Q6 und den Widerstand R8 zugeführt. Unterbricht infolge eines Fehlers einer der Transistoren T10, T11, fällt die Spannung am Widerstand 11 unter den zur Ueberbrückung der Zenerdiode notwendigen Wert und der Transistor T12 wird abgeschaltet.

Erfindungsgemäss wird also der Ausgabesignalkreis von den beiden Schaltelementen K1, Q5 bzw. K2, Q6 kontrolliert.

**Ansprüche**

1. Ueberwachungsschaltung für eine Signalausgabeschaltung an einer Bremseinrichtung eines Fahrzeuges, insbesondere eines Schienenfahrzeuges, wobei die Signalausgabeschaltung ein Schaltelement (K1, Q5) aufweist, das mit einem Eingangssignalkreis verbunden ist und das einen Ausgabesignalkreis kontrolliert, gekennzeichnet durch

— ein zweites Schaltelement (K2, Q6), das auch mit dem Eingangssignalkreis verbunden ist und das den Ausgabesignalkreis in Serie zum ersten Schaltelement (K1, Q5) mitkontrolliert,

— einen ersten und einen zweiten Vergleicher (G1, G2) und je dazu in Serie ein Verzögerungselement (T1, T2), wobei der erste Eingang (a) der beiden Vergleicher (G1, G2) mit dem Eingangssignalkreis und der zweite Eingang (b) des ersten Vergleichers (G1) bzw. des zweiten Vergleichers (G2) mit einem Schaltkreis (S3, R7 bzw. S4, R8) des ersten Schaltelementes (K1, Q5) bzw. des zweiten Schaltelementes (K2, Q6) verbunden sind und die beiden Verzögerungselemente (T1, T2) unterschiedliche Verzögerungszeiten aufweisen,

— einen ersten und einen zweiten Schalter (Q1, Q2), wobei der erste Schalter (Q1) bzw. der zweite Schalter (Q2) im Einschaltkreis des ersten bzw. des zweiten Schaltelementes (K1, Q5 bzw. K2, Q6) angeordnet und mit dem Ausgang des zweiten bzw. des ersten Verzögerungselementes (T2 bzw. T1) verbunden sind.

2. Ueberwachungsschaltung nach Anspruch 1, dadurch gekennzeichnet, dass als Schaltelemente Relais (K1, K2) vorgesehen sind, die je mindestens zwei mechanisch gekoppelte Schaltkontakte (S1, S3 und S2, S4) aufweisen, wobei je der eine Schaltkontakt (S1, S2) im Ausgabesignalkreis angeordnet und je der andere Schaltkontakt (S3, S4) mit dem zweiten Eingang (b) des zugehörigen Vergleichers (G1, G2) verbunden sind, dass im Einschaltkreis der beiden Relais (K1, K2) je eine weiterer Schalter (Q3, Q4) vorgesehen ist, die mit dem Eingangssignalkreis verbunden und in Serie zum ersten bzw. zweiten Schalter (Q1 bzw. Q2) angeordnet sind.

3. Ueberwachungsschaltung nach Anspruch 1, dadurch gekennzeichnet, dass als Schaltelemente elektronische Schalter (Q5, Q6) vorgesehen sind, deren Schalter direkt im Ausgabesignalkreis und durch ein dazwischengeschaltetes Entkopplungselement (D3) getrennt angeordnet und in deren Einschaltkreis je ein weiterer Schalter (Q3, Q4) in Serie zum zugehörigen ersten bzw. zweiten Schalter (Q1, Q2) vorgesehen sind, ferner dass der zweite Eingang (b) der Vergleicher (G1, G2) über je einen Widerstand (R7, R8) mit dem zugehörigen elektronischen Schalter (Q5, Q6) und der elektronische Schalter (Q6) mit einer Spannungsquelle verbunden sind.

4. Ueberwachungsschaltung nach einem der Ansprüche 1 bis 3, dadurch gekennzeichnet, dass in Serie zu den Verzögerungselementen (T1, T2) je ein Inverter (G3, G4) nachgeschaltet ist und als Vergleicher (G1, G2) EX-OR-Gatter verwendet werden.

5. Ueberwachungsschaltung nach einem der vorangehenden Ansprüche 1 bis 4, dadurch gekennzeichnet, dass als elektronische Schalter (Q1 bis Q6) Transistoren (T10, T11 und T12) mit je einer deren Basis vorgeschalteten Zenerdiode (D4, D5 und D6) verwendet werden.

**Claims**

1. Monitoring circuit for a signal output circuit on a brake installation of a vehicle, in particular a rail vehicle, the signal output circuit having a switching element (K1, Q5) which is connected to an input signal circuit and which controls an output signal circuit, characterised by

— a second switching element (K2, Q6) which is also connected to the input signal circuit and, in series to the first switching element (K1, Q5), also controls the output signal circuit,

— a first and a second comparator (G1, G2) and, in series with each of these, a delay element (T1, T2), the first input (a) of the two comparators (G1, G2) being connected to the input signal circuit, the second input (b) of the first comparator (G1) being connected to a circuit (S3, R7) of the first switching element (K1, Q5) and the second input (b) of the second comparator (G2) being connected to a circuit (S4, R8) of the second switching element (K2, Q6), and the two delay elements (T1, T2) having different delay times, and
— a first and a second switch (Q1, Q2), the first switch (Q1) being located in the switching-on circuit of the first switching element (K1, Q5) and being connected to the output of the second delay element (T2), and the second switch (Q2) being located in the switching-on circuit of the second switching element (K2, Q6) and being connected to the output of the first delay element (T1).

2. Monitoring circuit according to Claim 1, characterised in that the switching elements provided are relays (K1, K2) each of which has at least two mechanically coupled switching contacts (S1, S3 and S2, S4), one switching contact (S1, S2) in each case being located in the output signal circuit and the other switching contact (S3, S4) in each case being connected to the second input (b) of the associated comparator (G1, G2), and that, in the switching-on circuit of the two relays (K1, K2) a further switch (Q3, Q4) is provided in each case, which is connected to the input signal circuit and is arranged in series to the first and second switch (Q1 and Q2) respectively.

3. Monitoring circuit according to Claim 1, characterised in that the switching elements provided are electronic switches (Q5, Q6), the switches of which are arranged directly in the output signal circuit and separated by an interposed decoupling element (D3), and in the switching-on circuit of which a further switch (Q3, Q4) is provided in each case in series with the respective associated first and second switch (Q1, Q2), and that the second input (b) of the comparators (G1, G2) is in each case connected *via* a resistor (R7, R8) to the associated electronic switch (Q5, Q6) and the electronic switch (Q6) is connected to a voltage source.

4. Monitoring circuit according to one of Claims 1 to 3, characterised in that an inverter (G3, G4) is in each case series-connected after the delay elements (T1, T2) and EX-OR gates are used as the comparator (G1, G2).

5. Monitoring circuit according to one of the preceding Claims 1 to 4, characterised in that transistors (T10, T11 and T12), each with a Zener diode (D4, D5 and D6) series-connected before their base, are used as the electronic switches (Q1 to Q6).

## Revendications

1. Circuit de surveillance pour un circuit émettant un signal d'une installation de freinage d'un véhicule, notamment d'un véhicule sur rails, le circuit émettant le signal comportant un élément de commutation (K1, Q5) qui est relié à un circuit de signal d'entrée et qui commande un circuit de signal de sortie, caractérisé par

— un second élément de commutation (K2, Q6) qui est également relié au circuit du signal d'entrée et qui contrôle le circuit du signal de sortie avec le premier élément de commutation (K1, Q5), en série,
— un premier et un second comparateurs (G1, G2) et, associés respectivement en série, un élément de temporisation (T1, T2), la première entrée (a) des deux comparateurs (G1, G2) étant reliée au circuit du signal d'entrée et la seconde entrée (b) du premier comparateur (G1) ou du second comparateur (G2) étant reliée à un circuit de commutation (S3, R7 ou S4, R8) du premier élément de commutation (K1, Q5) ou du second élément de commutation (K2, Q6), et les deux éléments de temporisation (T1, T2) ont des durées de temporisation différentes,
— un premier et un second commutateurs (Q1, Q2), le premier commutateur (Q1) ou le second commutateur (Q2) étant prévu dans le circuit de commande du premier ou du second élément de commutation (K1, Q5, K2, Q6) et étant relié à la sortie du second ou du premier élément de temporisation (T2 ou T1).

2. Circuit de surveillance selon la revendication 1, caractérisé en ce que les éléments de commutation sont des relais (K1, K2) qui comportent chacun au moins deux contacts de commutation (S1, S3 ou S2, S4) couplés mécaniquement, et chaque fois un contact de commutation (S1, S2) est prévu dans le circuit du signal de sortie et chaque autre contact de commutation (S3, S4) étant relié à la seconde entrée (b) du comparateur (G1, G2) correspondant, en ce que dans le circuit de commande des deux relais (K1, K2), il est prévu chaque fois un autre commutateur (Q3, Q4) relié au circuit du signal d'entrée et en série par rapport au premier ou au second commutateurs (Q1 ou Q2).

3. Circuit de surveillance selon la revendication 1, caractérisé en ce que les éléments de commutation sont des commutateurs électroniques (Q5, Q6) dont le commutateur est prévu directement dans le circuit du signal de sortie et sont séparés par un élément de découplage (D3) intermédiaire, et dont le circuit de commande comporte chaque fois un autre commutateur (Q3, Q4) en série par rapport au premier ou au second commutateur (Q1, Q2), en ce qu'en outre la seconde entrée (b) des comparateurs (G1, G2) est reliée par une résistance respective (R7, R8) aux commutateurs électroniques correspondants (Q5, Q6) et le commutateur électronique (Q6) est relié à une source de tension.

4. Circuit de surveillance selon l'une des revendications 1 à 3, caractérisé en ce que, en série par rapport aux éléments de temporisation (T1, T2), il est prévu en aval chaque fois un inverseur (G3, G4) et en ce que les comparateurs (G1, G2) sont des portes EX OR.

5. Circuit de surveillance selon l'une des revendications précédentes 1 à 4, caractérisé en ce que les commutateurs électroniques (Q1-Q6) sont des transistors (T10, T11, T12) avec chaque fois une diode Zener (D4, D5 et D6) reliée à leur base.

FIG. 1

FIG. 2

FIG. 3

2

FIG. 4

FIG. 5